# EUROPÄISCHE PATENTSCHRIFT

(11) **EP 1 745 695 B1**
(45) Veröffentlichungstag und Bekanntmachung des Hinweises auf die Patenterteilung: **04.07.2007**
(21) Anmeldenummer: 05015575.3
(22) Anmeldetag: 18.07.2005
(51) Int. Cl.: A01K 63/00, B23P 21/00, B65D 13/02

(54) **Verfahren zur Herstellung von Behältern aus im wesentlichen plattenförmigen Elementen sowie nach dem Verfahren herstellbares Erzeugnis**
Method for manufacturing containers from substantially plate shaped elements and a product obtained thereby
Procédé pour la fabrication des récipients à base d'elements essentiellement en forme de plaque et produit ainsi obtenu

(43) Veröffentlichungstag der Anmeldung: 24.01.2007
(73) Patentinhaber: Juwel Aquarium GmbH & Co. KG, 27356 Rotenburg/Wümme (DE)
(72) Erfinder: Köhlmoos, Gerd, 21224 Rosengarten (DE)
(74) Vertreter: Niedmers, Ole

(56) Entgegenhaltungen:
- EP-A- 1 232 689

## Beschreibung

Die Erfindung betrifft ein Verfahren zur Herstellung von Behältern aus im wesentlichen plattenförmigen Elementen, die über ein Dicht- und Verbindungsmittel zur Ausbildung des Behälters miteinander verbunden werden, umfassend Seitenelemente und wenigstens ein Stirnelement sowie ein Bodenelement, wobei
wenigstens eines der Seitenelemente und/oder wenigstens ein Stirnelement in wenigstens einem Teil der Randbereiche unter Mitwirkung eines Roboters mit streifenförmig aufgebrachtem Dicht- und Verbindungsmittel versehen werden,
sowie ein nach dem Verfahren herstellbares Erzeugnis.

Ein Verfahren dieser Art, das auf die Anmelderin selbst zurückgeht, ist bekannt (EP-A-1 232 689). Das bekannte Verfahren zur Herstellung von Behältern der gattungsgemäßen Art, nach dem die Anmelderin seit dem Anmeldetag mit außergewöhnlich großem technischen und auch wirtschaftlichen Erfolg Behälter in Form von Aquariumgefäßen herstellt, hat sich in der Praxis sehr bewehrt. Mit dem bekannten Verfahren ist es der Anmelderin gelungen, aufgrund der wenigstens teilweise robotergestützten Herstellung der Behälter die Gestehungskosten auch für Aquariumgefäße derart zu minimieren, daß von der Anmelderin auch Marktsegmente erreicht werden konnten, die bis dahin durch die Anmelderin aufgrund der sehr strengen nationalen Sicherheitsvorschriften mit einer konventionellen Fertigung dieser Behälter und des dennoch gewünschten sehr hohem ästhetischem Anspruchs, den die Benutzer an derartige Behälter richten, nicht erreicht werden konnten. Mittels dem gemäß dem zwischenzeitlich in Form eines Patentes vorliegenden Verfahren konnten die vorangehend skizzierten Erfordernisse nicht nur eingehalten sondern weit übertroffen werden.

Das bekannte Verfahren läßt die Herstellung verschieden groß dimensionierter Behälter zu, wobei sich bei verschieden großen Behältern die Seitenwände und/oder die Stirnwände und/oder die Bodenwand im Hinblick auf ihre Länge und/oder Breite unterscheiden. Die Vorrichtung, mit der das bekannte Verfahren ausgeführt wird, muß von einem Wechsel der Herstellung eines Behälters einer bestimmten Größe auf die Herstellung eines Behälters einer anderen bestimmten Größe für eine bestimmte Zeit außer Funktion gesetzt werden und für den Wechsel von der Herstellung eines Behälters einer bestimmten Größe auf die Herstellung eines Behälters einer anderen bestimmten Größe sowohl mechanisch als auch in bezug auf die Steuerung der Verfahrensschritte zur Herstellung der Behälter umgerüstet werden, was steuerungstechnisch mittels einer Änderung der Hardware und auch der Software, mittels denen die Verfahrensschritte über die dazu herangezogene Vorrichtung gesteuert werden, erfolgt.

Diese Umrüstzeit ist dann akzeptabel, wenn nach Herstellung einer sehr großen Anzahl von Behältern einer Größe auf die Herstellung einer großen Anzahl von Behältern einer anderen Größe die vorerwähnte Umrüstung erfolgen soll. Behälter aber, die aufgrund ihrer Größe und/oder ihrer Formgebung naturgemäß nicht in sehr hohen Stückzahlen hergestellt werden, da naturgemäß für diese Behälter wenig Bedarf aufgrund der höheren Gestehungskosten und des hohen Platzbedarfes besteht und aufgrund dessen sehr viel niedrigere Stückzahlen in einem Herstellungszyklus einer Modellgröße hergestellt werden, sind die Umrüstzeiten für die Herstellung einer anderen Modelgröße und Modelart, die dann ggf. ebenfalls aufgrund ihrer Gestehungskosten und Größe in einem Herstellungszyklus nicht in einer großen Stückzahl hergestellt werden können, problematisch. Die Umrüstung ist mit einem Stillstand der Vorrichtung bzw. des Verfahrensablaufes verbunden, d.h., daß während dieser Zeit Behälter nicht hergestellt werden können und es muß dafür auch fachkundiges Personal herangezogen werden, um die mechanischen Veränderungen sowie die Veränderung der Hardware und der Software für die Steuerung des Verfahrens bewirken zu können.

Es ist deshalb Aufgabe der vorliegenden Erfindung, ein Verfahren zur Herstellung von Behältern der eingangs genannten Art zu schaffen, mit dem Behälter dieser Art mit hoher Präzision mechanisch stabil und druckdicht und mit großer Geschwindigkeit hergestellt werden können und dennoch eine Gewähr dafür gegeben werden muß, daß die Herstellungsrate höher als bei der im Stand der Technik bekannten Herstellungsrate ist und dennoch fortwährend eine gleichbleibende Güte der mittels des Dicht- und Verbindungsmittels hergestellten Naht erreicht wird, und daß die Umrüstzeit und der Umrüstaufwand bei einem Wechsel einer Modelart und/oder Größe eines Behälters zu einer anderen Model art und/oder Größe des Behälters mit sehr viel höherer Geschwindigkeit und auch flexibler gestaltet werden kann, als es bei den bisherigen bekannten Verfahren möglich war, wobei die hergestellten Behälter auch kostengünstig dem Markt zur Verfügung gestellt werden können, selbst wenn die hergestellten Behältermodel-1e größer und/oder mechanisch aufwendiger ausgestaltet sind als bisherige Behälter von sog. Standardbehälterversionen, die mittels des bekannten Verfahrens bisher in großer Stückzahl hergestellt worden sind.

Gelöst wird die Aufgabe gemäß der Erfindung dadurch,
daß zunächst das Bodenelement In seinem Randbereich unter Mitwirkung eines Roboters mit streifenförmig aufgebrachtem Dicht- und Verbindungsmittel versehen wird und
daß nachfolgend die Seitenelemente und wenigstens ein Stirnelement mit einem Roboter ergriffen und einzeln mit dem Bodenelement über sein darauf aufgebrachtes Dicht- und Verbindungsmittel und untereinander über das darauf aufgebrachte Dicht- und Verbindungsmittel verbunden werden.

Der Vorteil der erfindungsgemäßen Lösung besteht im wesentlichen darin, daß, wie angestrebt, die einzelnen Verfahrensschritte vollständig durch Manipulation der einzelnen, den Behälter bildenden plattenförmigen Elemente ausgeführt werden, d.h. besondere mechanische Vorrichtungen bzw. Einrichtungen, die mit den Robotern im Zuge der Herstellung eines Behälters bisher erforderlich waren und mit den Robotern zusammenwirkten, prinzipiell vollständig entbehrlich geworden sind. Nahezu alle Herstellungsschritte von der Bereitstellung der einzelnen plattenförmigen Elemente bis zur Fertigung der kompletten Behälter werden ausschließlich durch die Roboter bewirkt, was den Vorteil hat, daß bei einem Wechsel von der Herstellung eines Behälters einer Größe und Art auf die Herstellung eines größeren oder kleineren Behälters und/oder anderer Art des Behälters ausschließlich eine Änderung der Steuerparameter für die Roboter erforderlich ist, was real durch die Änderung eines Verfahrens- bzw. Programmablaufes zur Steuerung der Roboter in wenigen Minuten im Vergleich zu Umrüstzeiten von ca. 2 Stunden bei dem bisherigen, bekannten und eingangs beschriebenen Verfahren bewirkt werden kann und somit eine drastische Reduzierung der Umrüstzeiten nach sich zieht, so daß ein Modelwechsel von einer Behältergröße und/oder Art zu einer anderen BehältergröBe und/oder Art faktisch nur durch eine computergestützte Umstellung des Verfahrensablaufs in wenigen Minuten vonstatten gehen kann.

Gemäß einer vorteilhaften Ausgestaltung der Erfindung werden die Seitenwände und/oder das wenigstens eine Stirnelement in nacheinander erfolgenden Schritten mittels des Roboters mit dem Bodenelement verbunden, wobei diese Art der sequentiellen Herstellung des Behälters aus den einzelnen behälterbildenden Elementen quasi eine Grundversion des Verfahrens darstellt, die faktisch idealisiert mit einem einzigen Roboter auskommen kann, d.h. der gesamte Fertigungsvorgang eines Behälters durch nacheinander erfolgende Verfahrensschritte zur Herstellung eines kompletten Behälters erfolgen kann.

Vorteilhaft ist es aber auch, die Seitenelemente und/oder wenigstens das eine Stirnelement in wenigstens teilweise erfolgenden parallelen Schritten mittels einer Mehrzahl von Robotern mit dem Bodenelement zu verbinden, wobei auch die Möglichkeit besteht, die einzelnen Verfahrensschritte derart abzustimmen, daß bspw. beide Seitenwände und/oder bspw. beide Stirnwände (Rückwand, Vorderwand) jeweils von einem Roboter ergriffen werden und nach der Aufbringung des Dicht- und Verbindungsmittels mit dem Bodenelement verbunden werden. Diese Ausgestaltung erfordert natürlich einen höheren Aufwand an Robotern, diese Ausgestaltung hat aber den Vorteil, daß die Zeit für die Herstellung eines vollständigen Behälters erheblich reduziert werden kann. Es ist aber auch möglich, die Verbindung einzelner Elementegruppen jeweils durch einen Roboter ausführen zu lassen und dann die verbundenen Elementgruppen zur Ausbildung des fertigen Behälters zusammenzufügen.

Mittels des Verfahrens herstellbare Behälter weisen regelmäßig, aber nicht zwingend, bodenseitig einen sog. Stützrahmen auf, der nach Art eines im Querschnitt L-bzw. winkelförmig konturierten, um das Bodenelement umlaufenden Rahmens ausgebildet ist. Dieser Rahmen hat regelmäßig die Funktion einer vergrößerung der mechanischen Festigkeit des Behälters im Zuge der Herstellung und nach abgeschlossener Herstellung und auch die Funktion auch eines unteren optisch ästhetischen Abschlusses. Vorzugsweise kann deshalb das Bodenelement vor der Verbindung mit den Seitenelementen und dem wenigstens einen Stirnelement in dem das Bodenelement im wesentlichen umlaufenden Stützrahmen positioniert werden, was zusätzlich zu den voraufgeführten Vorteilen noch den Vorteil hat, daß der Stützrahmen eine gewisse Stütz- und Positionierungsfunktion für die auf das Bodenelement aufgebrachten übrigen behälterbildenden Elemente und die behälterbildenden Elemente untereinander hat.

Die Positionierung des Bodenelementes im Stützrahmen erfolgt vorzugsweise mittels eines Roboters, der das Bodenelement ergreift und in den Stützrahmen, der auf einem Untergrund liegt und in eine geeignete Position relativ zum Roboter überführt wird, einlegt.

Vorteilhafterweise wird das Verfahren derart ausgeführt, daß mittels eines 1. Roboters das Bodenelement von einem Bodenelementevvrrat entnommen wird und an einen 1. Ort der Aufbringung des Dicht- und Verbindungsmittels überführt wird und von dort nach Abschluß des Aufbringungsvorganges an einen 2. Ort zur Ausführung des Verfahrensschrittes b. überführt wird. Regelmäßig, aber nicht zwingend, ist das Bodenelement zuvor auf zuvor beschriebene Weise im Stützrahmen mittels eines Roboters, regelmäßig des 1. Roboters, mit zuvor aufgebrachtem besagten Dicht- und Verbindungsmittel versehen, positioniert worden.

Das Verfahren wird vorteilhafterweise dadurch weitergebildet und modifiziert, daß das vom Bodenelementvorrat entnommene Bodenelement vor der Überführung an den 1. Ort der Aufbringung des Dicht- und Verbindungsmittels in bezug auf seine Position relativ zu einem Aktuatorarm des 1. Roboters justiert und vermessen wird, wobei durch die Justage und Vermessung dem Umstand Rechnung getragen wird, daß die den Behälter bildenden einzelnen plattenförmigen Elemente in bezug auf ihre Länge, Breite und Dicke und, bei gebogenem (vorderem) Stirnelement, bspw. in Form einer gebogenen vorderen Scheibe eines Aquariumbehälters, bestimmten Herstellungstoleranzen unterworfen sind, die durch die Justage und Vermessung ermittelt und für den weiteren Verfahrensverlauf bei den nachfolgenden Bewegungsschritten des Roboters bzw. der Roboter bei deren Bewegungssteuerung berücksichtigt werden.

Vorteilhaft ist es, einen 2. Roboter vorzusehen, wobei mittels dieses 2. Roboters die Seitenelemente und wenigstens ein Stirnelement von einem Seiten- und Stirnelementvorrat entnommen und vorzugsweise mittels eines 3. Roboters an einen 1. Ort zur Aufbringung des Dicht- und Verbindungsmittels überführt werden und von dort nach Abschluß des Aufbringungsvorganges des Dicht- und Verbindungsmittels an einen 2. Ort zur Ausführung des besagten Verfahrensschrittes c. überführt werden, d.h. dem Ort, wo die Seitenelemente und das wenigstens eine Stirnelement mit dem Bodenelement und untereinander verbunden werden.

Ebenso wie die aus einem Bodenelementvorrat entnommenen Bodenelemente werden vorzugsweise auch die Seitenelemente, die vom 2. Roboter erfaßt werden und auch das gleichermaßen von diesem erfaßte wenigstens eine Stirnelement vor Übernahme durch den 3. Roboter in bezug auf ihre Positionierung relativ zu einem Aktuatorarm des 3. Roboters im Hinblick auf ihre Länge, Breite und Dicke justiert und vermessen, was auch im Hinblick auf die Seitenelemente und das wenigstens eine Stirnelement aufgrund der Herstellungstoleranzen der besagten Elemente für einen reibungslosen Ablauf der Herstellungsschritte bis zur Fertigung des kompletten Behälters nötig ist.

Die Justage der Position des Bodenelementes erfolgt vorzugsweise durch Ablage auf einen in zwei Freiheitsgraden geneigten ersten Positionierungstisch, so daß das darauf abgelegte Bodenelement nach dem AuBereingriffkommen mit dem Roboterarm bzw. einer dort angebrachten Handhabe aufgrund der Gravitation in eine Anschlagecke des Positionierungstisches rutscht. Nachfolgend wird mittels einer Vermessungseinrichtung, die bspw. lasergestützt ist, die Länge und die Breite und ggf. auch die Dicke des Bodenelementes gemessen und die gemessenen Werte werden dann der nachfolgenden Steuerung des Aktuatorarms des 1. Roboters zugrundegelegt.

Ebenso wie die Justage der Position des Bodenelementes kann vorzugsweise die Justage der Position der Seitenelemente und des wenigstens einen Stirnelementes durch Ablage auf einen ebenfalls in zwei Freiheitsgraden geneigten 2. Positionierungstisch erfolgen, wobei auch hier nach dem Außereingriffkommen der Handhabe des Roboterarmes infolge der Gravitation das auf dem geneigten Positionierungstisch jeweils liegenden Seitenelement oder Stirnelement zur Anlage an eine Anschlagecke gleitet, wobei nachfolgend ebenfalls auf vorbeschriebene Weise eine Messung der Länge und Breite sowie ggf. der Dicke der Elemente erfolgt und auch dieses Meßergebnis der weiteren gesteuerten Bewegung des Aktuatorarms des 3. Roboters für die Ausführung der weiteren Verfahrensschritte zugrundegelegt wird.

Vorteilhafterweise kann aber auch das Messen, das Kalibrieren und das Justieren der den Behälter bildenden Elemente nicht von einem Eckwinkel des Elements aus erfolgen, sondern von der Mitte bzw. einen festzulegenden Flächenmittelpunkt der Elemente aus erfolgen.

Gemäß einer noch anderen weiteren vorteilhaften Ausgestaltung der Erfindung wird wenigstens das nach Verfahrensschritt c. erste bzw. eine mit dem Bodenelement verbundene Stirnelement, das regelmäßig das rückseitige Stirnelement ist (bspw. die Rückseite eines Aquariumbehälters) nach dem Aufsetzen auf das Bodenelement wenigsten zeitweise gestützt in der bestimmungsgemäßen Position gehalten. Prinzipiell kann diese zeitweise Stützung des Stirnelementes durch den 2. Roboter selbst erfolgen, und zwar solange, bis wenigstens ein Seitenelement mit dem Bodenelement und somit, um bei diesem Beispiel zu bleiben, dem rückseitigen Stirnelement verbunden wird und das Dicht- und Verbindungsmittel zumindest eine solche Konsistenz einnimmt, daß ein erster Halt- bzw. Verbindungseffekt zwischen dem Bodenelement und dem Stirnelement und einem Seitenelement einsetzt.

Da aber während dieser Zeit bei dieser Ausgestaltung des Verfahrensablaufes der 2. Roboter zwangsweise inaktiv sein muß, d.h. nicht für weitere Aufgaben als die momentane Stützaufgabe zur Verfügung steht, ist es bei einer Weiterbildung der Vorrichtung vorteilhaft, das Stirnelement mittels einer am Ort der Ausführung des Verfahrensschrittes c. angeordneten Stützeinrichtung in Position zu halten, die einen derartigen Aufbau und eine derartige Funktion hat, daß sie ausschließlich Stützaufgaben hat und keine weiteren Aufgaben von dieser auszuführen sind, wodurch erreicht wird, daß der 2. Roboter nach der Positionierung des Stirnelementes auf dem Bodenelement sofort wieder für weitere Aktionen bereitsteht.

Grundsätzlich kann die Stützeinrichtung beliebige geeignete Form haben und beliebige geeignete Haltemittel aufweisen, mit denen das Stirnelement am Ort der Ausführung des Verfahrensschrittes c. in seiner Vertikalen Stellung gehalten wird, bspw. mittels lösbarer Klemmeinrichtungen, die mechanisch in eine Halteposition verschwenkt werden können und aus dieser wieder herausgeschwenkt werden können, um das Stirnelement freizugeben. Vorzugsweise ist aber das Haltemittel der Stützeinrichtung durch eines oder mehrere unterdruckbeaufschlagbare Haltemittel ausgebildet, das bzw. die den Vorteil hat bzw. haben, das diese faktisch keine mechanischen, bewegbaren Elemente aufweisen, sondern lediglich nach dem Prinzip von Saugnäpfen funktionieren, die in haltenden Eingriff mit den die Behälter bildenden Elementen durch Anlegen von Unterdruck kommen und außer Eingriff mit den Elementen kommen, wenn zwischen Haltemittel und Behälterelement wieder Normaldruck hergestellt wird.

Auch das Bodenelement sowie das wenigstens eine Stirnelement und die Seitenelemente an dem und von dem 0rt ihrer Behandlung werden ebenso vorteilhafterweise von den Robotern über dort geeignet am Manupulatorarm angebrachte unterdruckbeaufschlagbare, gesteuert haltbare und lösbare Haltemittel verbracht, wobei diese Haltemittel nach dem gleichen Prinzip wie die zuvor im Zusammenhang mit der Stützeinrichtung beschriebenen Haltemittel 1 nach Art von Saugnäpfen aufgebaut sind und betätigt werden.

Diese Art der Ausgestaltung der Haltemittel durchgängig für die Handhabung aller den Behälter bildenden Elemente vereinfacht auch die Steuerung dieser Haltemitte für die Ausführung des Haltevorgangs und für die Ausführung des Lösevorganges, wobei diese unterdruckbeaufschlagten Haltemittel zudem auch einen sicheren Halt der den Behälter bildenden Elemente während der Handhabung mit den Robotern bilden, wobei selbst extrem schwere den Behälter bildende Elemente, die zur Herstellung großer Behälter Verwendung finden, sicher gehalten und gehandhabt werden können.

Bei einer weiteren vorteilhaften Ausgestaltung des Verfahrens ist am 1. Ort der Aufbringung des Dicht- und Verbindungsmittels eine Aufbringeinheit vorgesehen, die entweder derart betreibbar ist, daß die von dieser abgegebenen Menge des Dicht- und Verbindungsmittels pro Zeit steuerbar ist, oder daß die Menge des Dicht- und Verbindungsmittels pro Zeit durch die Geschwindigkeit bestimmt wird, mit der das jeweilige mit dem Dicht- und Verbindungsmittel zu versehende behälterbildende Element an dieser Aufbringeinheit an wenigstens einer dort regelmä-Big vorhandenen Austrittsdüse vorbeigeführt wird. Da die Geschwindigkeit der Vorbeiführung, d.h. die Bewegung des diesen Vorgang bewirkenden Roboters, einstellbar ist, kann eine genaue Dosierung der pro Zeit aufgebrachten Menge des Dicht- und Verbindungsmittels über die Schritte des Verfahrensablaufs genau gesteuert werden. Es ist aber auch möglich, beide vorgenannten Steuerungsmethoden der Menge des Dicht- und Verbindungsmittels, das aufzubringen ist, steuerungs- und verfahrenstechnisch miteinander zu kombinieren. Die Aufbringeinheit selbst kann grundsätzlich von einem konventionellen System gebildet werden, das, hydraulisch betrieben, zum Aufbringen von Dicht- und Verbindungsmittel, wie dieses auch in anderen technischen Bereichen außerhalb des Behälterbaus zu finden ist, Verwendung findet.

Ganz besonders Vorteilhaft ist es aber, die Aufbringung des Dicht- und Verbindungsmittels auf das Bodenelement und/oder die Seitenelemente und/oder das Stirnelement oder die Stirnelemente mittels eines Roboters erfolgen zu lassen, der in einem gesonderten Verfahrensschritt oder in Kombination mit der Handhabung eines behälterbildenden Elementes das Dicht- und Verbindungsmittel auf dem dafür vorgesehenen behälterbildenden Element aufträgt. Diese Art des Aufbringens des Dicht- und Verbindungsmittels auf das dafür bestimmte behälterbildende Element gestattet eine sehr flexible Verfahrensführung und ist zudem mit ggf. noch höherer Präzision im Hinblick auf die Aufbringung des Dicht- und Verbindungsmittels auf das behälterbildende Element ausführbar.

Ganz besonders vorteilhaft ist es, daß der Roboter das Dicht- und Verbindungsmittel die Aufbringung auf das Bodenelement und/oder die Seitenelemente und/oder das Stirnelement oder die Stirnelemente ausführt, der die jeweiligen Elemente bei der Ausführung der erfindungsgemäßen Verfahrensschritte selbst handhabt, d.h. dafür kein gesonderter weiterer Roboter vorgesehen wird, so daß die Herstellungsgeschwindigkeit pro Behälter erhöht werden kann und dennoch auf die Bereitstellung eines gesonderten Roboters für diesen Zweck k verzichtet werden kann.

Da alle behälterbildenden Elemente nach ihrer Entnahme aus einem Elementvorrat im Hinblick auf ihre Lage relativ zum Roboter justiert und vermessen werden müssen, bevor die erfindungsgemäßen weiteren Verfahrensschritte ausgeführt werden, und dieses Justieren und Vermessen an einem vorbestimmten Ort erfolgen muß, ist es schließlich außerordentlich vorteilhaft, die Aufbringung des Dicht- und Verbindungsmittels auf das Bodenelement und/oder den Seitenelementen und/oder dem Stirnelement oder den Stirnelementen mittels dem die jeweiligen Elemente handhabenden Roboter oder mittels eines gesonderten Roboters an dem Ort der Vermessung und Justage erfolgen zu lassen, bspw. an dem normalerweise in zwei Freiheitsgraden geneigten Justiertisch, der dann, falls dazu erforderlich, nach Abschluß der Justage und der Vermessung des darauf liegenden behälterbildenden Elementes für die Aufbringung des Dicht- und Verbindungsmittels in die Waagerechte überführt wird und nach Abschluß des Aufbringvorganges des Dicht- und Verbindungselementes wiederum in die in zwei Freiheitsgraden gekippte Stellung überführt wird und für einen neuen Justierungs- und Vermessungsvorgang des nächsten behälterbildenden Elementes bereitsteht.

Das mittels dem erfindungsgemäßen Verfahren hergestellten Erzeugnis kann grundsätzlich ein beliebiger Behälter für eine grundsätzlich beliebige Verwendung sein. Ganz besonders vorteilhaft ist es aber, das mittels dem Verfahren hergestellte Erzeugnis als Aquarium- oder Terrariumbehälter auszubilden, wobei mittels dem erfindungsgemäßen Verfahren hergestellte Aquarium- und Terrariumbehälter aufgrund der Nutzung des erfindungsgemäß vorgeschlagenen Verfahrens sehr niedrige Gestehungskosten aufweisen, so daß diese sich auch einem sehr breiten Abnehmerkreis zuwenden können, für den derartige Aquarium- und Terrariumbehälter bisher nicht zugänglich waren.

Dabei kann mittels dem Verfahren ein Erzeugnis, d.h. ein Behälter, hergestellt werden, der letztlich aus beliebigem geeigneten Werkstoff hergestellt werden kann, wobei die den Behälter bildenden einzelnen Elemente alle im wesentlichen plattenförmig entweder eben oder gebogen ausgebildet werden können.

Für die Ausbildung eines Erzeugnisses in Form eines Aquarium- oder Terrariumbehälters ist der Behälter vorzugsweise wenigstens teilweise aus Glas ausgebildet.

Die Erfindung wird nun unter Bezugnahme auf die nachfolgenden schematischen Zeichnungen anhand eines Ausführungsbeispieles im einzelnen beschrieben. Darin zeigen:
- Fig. 1: in der Draufsicht in stark schematisierter Form eine Vorrichtung, die eine Mehrzahl von Robotern umfaßt, mit der das erfindungsgemäBe Verfahren zur Herstellung von Behältern ausgeführt werden kann, und
- Fig. 2: in einer stark schematisierten Abwicklung einen mittels dem erfindungsgemäßen Verfahren hergestellter Behälter aus ebenen plattenförmigen Elementen in der Abwicklung vor der Zusammenfügung zu einem Behälter zur verdeutlichten Darstellung derjenigen Bereiche der behälterbildenden Elemente, die mit einem Dicht- und Verbindungsmittel versehen sind.

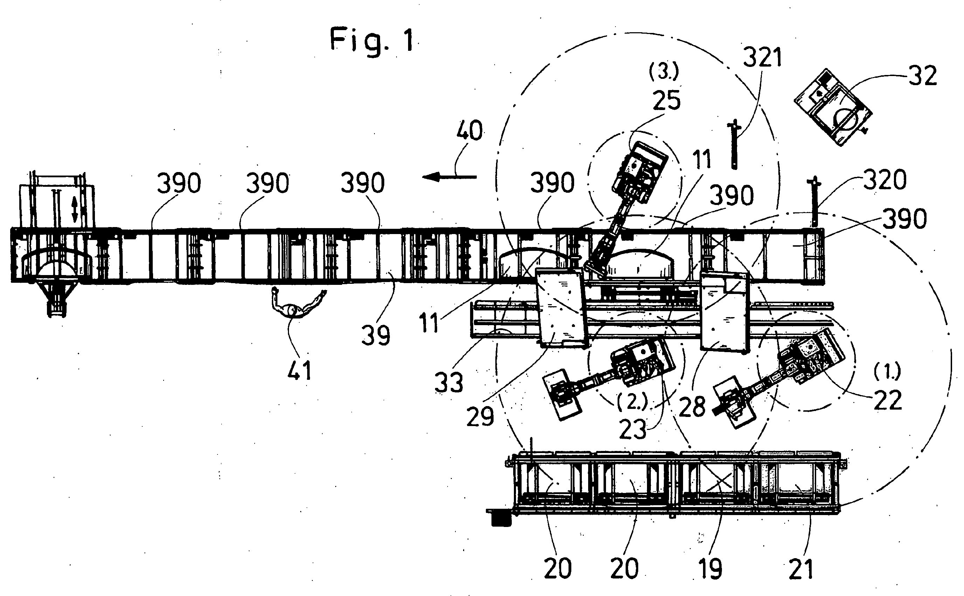

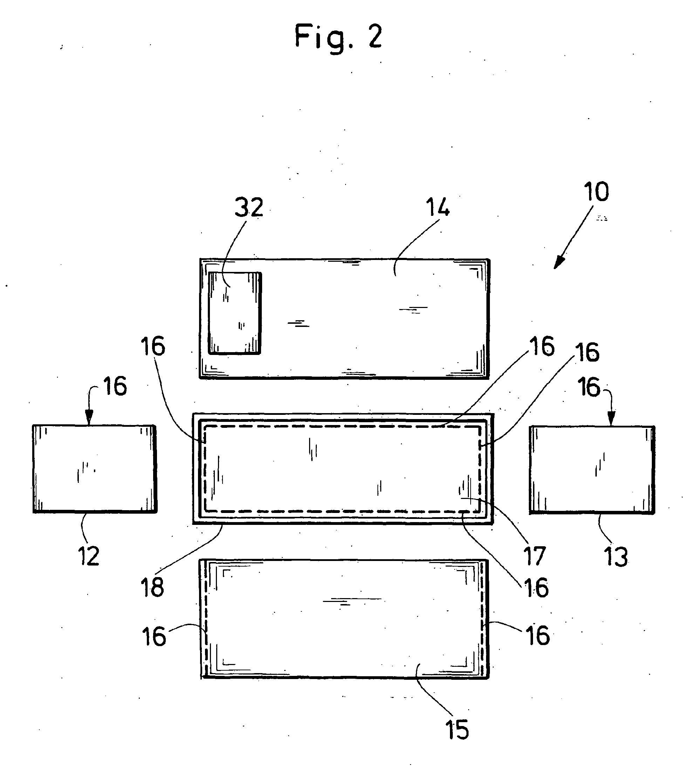

Es wird zunächst Bezug genommen auf die Darstellung von Fig. 2, in der schematisch in auseinandergezogener und abgewickelter Darstellung ein Behälter 11 dargestellt ist, der mittels dem erfindungsgemäßen Verfahren unter Zuhilfenahme der in Fig. 1 dargestellten Vorrichtung 10 hergestellt wird.

Vorangestellt wird, daß der in Fig. 2 dargestellte Behälter 11, wenn er seine endgültige Form nach Abschluß des erfindungsgemäßen Herstellungsverfahrens eingenommen hat, eine quaderförmige Form aufweist, d.h. einen rechteckigen Querschnitt (von oben, von der Seite und von vorn betrachtet). Mittels dem erfindungsgemäßen Verfahren können aber auch im Querschnitt dreieckige Behälter 11 ausgebildet werden, wobei als vorderes Stirnelement 15 ein solches Element vorgesehen ist, das eine im wesentlichen halbkreisförmig geformte Struktur aufweist. Mittels dem erfindungsgemäßen Verfahren können auch Behälter 11 hergestellt werden, die ein rückwärtiges ebenes Stirnelement 15, zwei Seitenelemente 12, 13 und ein vorderes Stirnelement 15 aufweisen, wobei das vordere Stirnelement nicht plan, wie in Fig. 2 schematisch dargestellt, sondern im Querschnitt gebogen ausgebildet ist.

Grundsätzlich sind mittels dem erfindungsgemäßen Verfahren alle denkbaren Formen von Behältern 11, soweit sie plattenförmige, behälterbildende Elemente 12, 13, 14 und 15 aufweisen, herstellbar. Die Herstellung des Behälters 11 mittels der Vorrichtung 10, mit der das erfindungsgemäße Verfahren ausgeführt werden kann, wird anhand eines quaderförmigen Behälters 11 beschrieben, wie er in Fig. 2 in besagter auseinandergezogener und abgewickelter Darstellung dargestellt ist. Soweit die Verfahrensführung von der Herstellung eines solchen Behälters 11 abweicht, wird nachfolgend darauf im einzelnen eingegangen werden.

Der in Fig. 1 dargestellte Behälter 11 besteht aus zwei plattenförmigen Seitenelementen 12, 13 und zwei plattenförmigen Stirnelementen 14, 15, die mit einem plattenförmigen Bvdenteil 17 über Dicht- und Verbindungsmittel 16 verbunden werden. Der Behälter 11 umfaßt darüber hinaus einen Stützrahmen 18, der ein im wesentlichen L-geformtes Querschnittsprofil aufweist und in den das Bodenelement 17, ggf. unter Zwischenlage eines geeignet dimensionierten Dicht- und Verbindungsmittels (nicht dargestellt), eingelegt wird. Der Behälter 11 besteht hier aus Glasplatten und bildet in der fertigen Form, d.h. nach Abschluß des nachfolgenden, noch im einzelnen beschriebenen Herstellungsverfahrens, ein Aquarium- bzw. Terrariumgefäß. Das nachfolgend beschriebene Verfahren eignet sich aber auch zur Herstellung von anderweitig nutzbaren Behältern 11, wobei die den Behälter 11 bildenden plattenförmigen Elemente aus beliebigen geeigneten Werkstoffen bzw. Werkstoffverbindungen bestehen können. Das Herstellungsverfahren ist von den jeweils gewählten Werkstoffen für die Ausbildung der Elemente unabhängig, so daß nachfolgend im allgemeinen immer von den den Behälter 11 bildenden Seitenelementen 12, 13, dem Stirnelement 14 bzw. den Stirnelementen 14 und 15 und dem Bodenelement 17 gesprochen wird.

In Fig. 2 ist durch eine gestrichelte Darstellung in den Randbereichen des vorderen Stirnelements 15 sowie des Bodenelements 17 das auf diesen Elementen aufgebrachte streifenförmige Dicht- und Verbindungsmittel 16 angedeutet. Auf den eigentlichen Stirnkanten bzw. Stirnseiten, d.h. jeweils an einer Stirnkante bzw. Stirnseite von vier Stirnkanten bzw. Stirnseiten der Seitenelement 12, 13 ist ein streifenförmiges Dicht- und Verbindungsmittel 16 aufgebracht, was durch die dort jeweils zur Bezugsziffer 16 gehörenden Pfeile angedeutet ist bzw. den Ort zeichnerisch darstellen soll, an dem bei den Seitenelementen 12, 13 das Dicht- und Verbindungsmittel aufgebracht ist.

Bei dem Bodenelement 17 ist das Dicht- und Verbindungsmittel 16 einmal vollständig umlaufend im Randbereich auf der oberen Fläche aufgebracht, wobei darauf noch im einzelnen weiter unten eingegangen wird, und zwar im Zusammenhang mit der Ausführung des Herstellungsverfahrens.

Es sei an dieser Stelle darauf hingewiesen, daß die Aufbringung des Dicht- und Verbindungsmittels 16, es ist in diesem Zusammenhang immer die streifenförmige Ausbildung bzw. der streifenförmige Auftrag des Dicht- und Verbindungsmittels 16 auf einem behälterbildenden Element gemeint, im Rahmen der Erfindung liegend auch in anderer Weise erfolgen kann, je nach gewünschter Verfahrensführung. Das erfindungsgemäße Prinzip wird aber, wie gesagt, anhand der Ausbildung des Behälters gemäß Fig. 2 beschrieben, so daß an dieser Stelle von der gesonderten Erwähnung anderer Aufbringungsorte des Dicht- und Verbindungsmittels 16 auf den behälterbildenden Elementen aus Einfachkeitsgründen abgesehen wird, wobei aber noch darauf hinzuweisen ist, daß auch dann ggf. die Aufbringungsorte des Dicht- und Verbindungsmittels 16 von der Darstellung gemäß Fig. 2 abweichen können, wenn bspw. zweikomponentige Dicht- und Verbindungsmittel 16 verwendet werden.

Am hinteren Stirnelement 14, vgl. ebenfalls Fig. 2, ist beispielhaft ein Ausrüstungs- bzw. Betriebselement 32 angeordnet, das bspw. bei Ausbildung des Behälters 11 als Aquariumgefäß bspw. ein Filter- bzw. Reinigungselement sein kann. Dieses wird an sich auf beliebige geeignete Weise mit einem den Behälter 11 bildenden, hier im einzelnen nicht dargestellten Element verbunden, bspw. mittels einer Mehrzahl punktförmig aufgebrachter Befestigungspunkte aus dem Werkstoff, der auch das Dicht- und Verbindungsmittel 16 bildet. An sich kann das Ausrüstungs- und Betriebselement 32 an einem beliebigen behälterbildenden Element befestigt werden. Die Darstellung des Befestigungsortes gemäß Fig. 2 hat somit keinen einschränkenden Charakter auf den Ort seiner Befestigung.

Es wird nun Bezug genommen auf die Darstellung gemäß Fig. 1, in der eine Vorrichtung 10 dargestellt ist, mit der der vorangehend beispielhaft beschriebene Behälter 11 gemäß dem erfindungsgemäßen Verfahren hergestellt werden kann. Die Vorrichtung umfaßt hier beispielhaft drei Roboter, 1. Roboter 22, 2. Roboter 23 und 3. Roboter 24. Zu den Positionierungsorten der Roboter 22, 23 und 24 bzw. von diesen weg führt ein bandförmiges Fördermittel 39, das in einzelne Fördermittelsegmente 390 unterteilt ist, die einzeln angetrieben werden können. Somit können fertige Behälter 11. jeweils getaktet, zur manuellen Endbearbeitung, soweit erforderlich, in Richtung des Pfeiles 40 einzeln und gezielt gesteuert verschoben werden, und zwar an den Ort, an dem bspw. eine Bedienungsperson 41 am Fördermittel positioniert ist. Die Fördermittel 39 fördern auch in Richtung des Pfeiles 40 von der ersten Herstellungsstation im Bereich des 1. Roboters 22, der den dann schon teilgefertigten Behälter 11 zur endgültigen Fertigungsposition im Bereich des 3. Roboters 24 fördert.

Im Zugriffsbereich des 1. Roboters 22 und des 2. Roboters 23 ist ein Elementvorrat 21 für die Bodenelemente, ein Elementvorrat 19 für die Seitenelemente und zwei Elementvorräte 20 für die Stirnelemente angeordnet, wobei der 2. Roboter 23 Zugriff auf die Elementvorräte 20 und 19 hat, wohingegen der 1. Roboter 22 Zugriff auf den Elementvorrat 21 hat, in dem die Bodenelemente 17 bereitstehen.

Im Zugriffsbereich des 1. Roboters 22 und im Zugriffsbereich des 2. Roboters 23 ist jeweils zwischen den Robotern und dem Fördermittel 39 jeweils ein Positionierungstisch 28, 29 angeordnet, der in seiner Grundposition, ausgehend von der Horizontalen, in zwei Freiheitsgraden geneigt ist. Ein jeweils auf diese Positionierungstische 28, 29 vom 1. Roboter 22 bzw. dem 2. Roboter 23 abgelegtes Bodenelement 17 bzw. jeweils abgelegtes Seitenelement 12, 13 sowie Stirnelement 14, 15 gleitet nach dem Außereingriffkommen mit der mit unterdruckbeaufschlagten Haltemitteln versehenen Handhabe der jeweiligen Roboter 22, 23 aufgrund der Gravitation mit seinem Eckbereich somit in einen winkelförmigen Anschlag und kommt in dieser Position zu liegen. Der Positionierungstisch 28, 29 dient nun der Justierung und der Vermessung der äußeren Abmaße des jeweils dort zuliegenkommenden, behälterbildenden Elements, worauf noch weiter unten im einzelnen eingegangen werden wird.

Auf der dem 1. und 2. Roboter 22, 23 gegenüberliegenden Seite des Fördermittels 39 ist der 3. Roboter 24 angeordnet, der nach Art eines "handshake" mit dem 2. Roboter 23 zusammenwirkt, die beide somit ebenfalls mit dem Positionierungstisch 29 zusammenwirken.

Im Zugriffsbereich des 1. Roboters 22 und des 3. Roboters 24 ist eine Auftrageinheit 32 angeordnet, mittels der Dicht- und Verbindungsmittel 16 über zwei Auftragdüsen 320, 321 auf entsprechende behälterbildende Elemente aufgetragen wird, die an diese Auftragdüsen 320, 321 mittels dem 1. Roboter 22 und dem 3. Roboter 24 zur Ausbildung der streifenförmigen Dicht- und Verbindungsmittel 16 herangeführt werden.

Erfindungsgemäß hergestellte Behälter 11 weisen in der Regel einen unteren Stützrahmen 18 auf, vgl. auch Fig. 2, der den Behälter 11 unten im Bereich des Bodenelementes 17 und der angrenzenden Seitenelemente 12, 13 sowie der angrenzenden Stirnelemente 14, 15 im Bodenbereich einfaßt. Dieser regelmäßig in Form eines einstückigen Kunststoffteils hergestellte Stützrahmen 18, der allerdings nicht zwingen aus Kunststoff, sondern auch aus beliebigen anderen geeigneten Werkstoffen, bspw. Metall, hergestellt werden kann, wird der Vorrichtung 10 ebenfalls im Bereich des Zugriffsbereiches des 1. Roboters 22 mittels eines geeignet angeordneten Fördermittels 33, das hier im wesentlichen parallel zum Fördermittel 39 angeordnet ist, zugeführt, und zwar bis in den Bereich zum 1. Roboter 22, so daß das Bodenelement 17 vom 1. Roboter 22 ineingriffgenommen bzw. erfaßt werden kann. Die Stützrahmen 18 werden nacheinander mittels hier nicht dargestellter Mittel, entweder mittels einer gesteuert betriebenen Zuführung (nicht dargestellt) oder per Hand durch eine Bedienungsperson auf das Fördermittel 33 gegeben und mittels dem Fördermittel in den Zugriffsbereich des 1. Roboters 22 geführt.

Es ist aber auch möglich, die Stützrahmen 18 anstatt mit dem Fördermittel 33 an den Positionierungsort zuzuführen, die Stützrahmen 18 in einen Stützelementvorrat (nicht dargestellt) bereitzustellen, der beispielsweise wie die Elementvorräte 19, 20, 21 aufgebaut und angeordnet ist, so daß der Stützrahmen 18 von einem Roboter. beispielsweise dem 1. Roboter 22 aus dem Stützelementvorrat ergriffen und am vorbeschriebenen Ort, d.h. auf das Fördermittel 39 zur Ausführung der weiteren Verfahrensschritte abgelegt wird.

Das erfindungsgemäße Verfahren läuft nun gemäß folgender Verfahrensschritte ab, wobei die Verfahrensschritte anhand der Herstellung eines Behälters 11 beschrieben werden, wie er in Fig. 2 in abgewickelter, auseinandergezogener Darstellung im Hinblick auf die den Behälter 11 bildenden Elemente dargestellt ist. Die Verfahrensschritte laufen dabei wie folgt ab, wobei zum besseren Verständnis die Darstellung von Fig. 1 heranzuziehen ist:

Der 1. Roboter 22 ergreift einen Stützrahmen 18. der vom Fördermittel 32 in seinen Zugriffsbereich gefördert wird, wobei ein minimaler und ein maximaler Zugriffsbereich des 1. Roboters 22, des 2. Roboters 23 und des 3. Roboters 24 durch jeweilige kreisförmige, strickpunktiert dargestellte Zugriffsbereiche um ihre jeweiligen zentralen vertikalen Drehachsen dargestellt ist.

Der mit dem 1. Roboter 22 ergriffene Stützrahmen 18 wird auf das Fördermittel 39 gelegt und dort mittels am Fördermittel 39 angeordneten Positionierungseinrichtungen (nicht dargestellt) in dieser Position gehalten. Der 1. Roboter 22 ergreift nachfolgend aus einem Elementvorrat 21 ein Bodenelement 17 und legt dieses Bodenelement 17 auf dem in seinem Zugriffsbereich angeordneten Positionierungstisch 28 ab, wobei aufgrund der Gravitation aufgrund des in zu diesem Augenblick in zwei Freiheitsgraden geneigten Positionierungstisches 28 das Bodenelement 17 an einen rechtwinkligen Endanschlag gleitet, so daß das Bodenelement 17 für die weitere Handhabung durch den 1. Roboter 22 geeignet positioniert ist, wobei in dieser Stellung eine Kalibrierung erfolgt, die für die weitere Behandlung des Bodenelementes 17 in der Vorrichtung 10 erforderlich ist. In dieser Stellung wird darüber hinaus das Bodenelement 17 durch hier nicht dargestellte Vermessungseinrichtungen, die durch ein geeignet angeordnetes Lasersystem verwirklicht werden können, in bezug auf Länge, Breite und Dicke vermessen. Diese Meßwerte gehen in die weitere Bewegungssteuerung zur Herstellung des fertigen Behälters 11 ein, d.h. aus ihnen werden geeignete präzise Verfahrensparameter errechnet und der weiteren Steuerung zugrundegelegt. Der Schritt der Positionierung, Kalibrierung und Vermessung erfolgt prozeßgestützt ohne äußeren Eingriff durch eine Bedienungsperson oder dergleichen.

Nachfolgend wird das Bodenelement 17 wiederum vom 1. Roboter 22 ergriffen und vom Positionierungstisch 28 vor eine Auftragsdüse 321 der Aufbringeinheit geführt, über die ein Dicht- und Verbindungsmittel 16 umlaufend um den oberen Bereich des Bodenelementes 17 in der Nähe seines umlaufenden Randes aufgebracht, vgl, die gestrichelte Darstellung auf dem Bodenelement 17 in Fig. 2, wird. Nachdem das Dicht- und Verbindungsmittel 16 in Form eines umlaufenden Auftrags aufgebracht worden ist, wird mittels dem 1. Roboter 22 das Bodenelement 17 in den auf dem Fördermittel 39 liegenden Stützrahmen 18 eingelegt.

Nachfolgend wird der Stützrahmen 18 mit eingelegtem Bodenelement 17 in den Handhabungsbereich des 2. Roboters 23, der Richtung des Pfeiles 40 folgend, überführt und dort geeignet positioniert. Im Vorwege hatte der 2. Roboter 23 dem Elementvorrat 20, zu dem dieser Zugriff hat, ein Stirnelement 14 (das hintere Stirnelement, s. Fig. 2) entnommen und auf dem in seinem Wirkbereich liegenden Positionierungstisch 29 abgelegt, der prinzipiell genauso aufgebaut ist, wie der Positionierungstisch 28, und auf dem der gleiche Positionierung-, Kalibrierungs- und vermessungsvorgang bzgl. des Stirnelementes 14 erfolgt, wie im Zusammenhang mit dem Bodenelement 17 am Positionnierungstisch 28 schon beschrieben.

Nach Abschluß dieser Vorgänge ergreift der 2. Roboter 23 wiederum das Stirnelement 14 und setzt es vertikal als hinteres Stirnelement 14 (Rückseite) des Behälters 11 auf das Bodenelement 17, und zwar im Randbereich, an dem zuvor das Dicht- und Verbindungsmittel 16 aufgebracht worden ist. In dieser vertikalen Stellung wird das Stirnelement 14 durch eine hier im einzelnen nicht gesondert dargestellte Stützeinrichtung 30 in vertikaler Stellung gehalten, so daß der 2. Roboter 23 in dieser Stellung das Stirnelement 14 loslassen bzw. außereingriff mit diesem kommen kann.

Der 2. Roboter 23 kann nun von einem Elementvorrat 19 ein Seitenelement 12 entnehmen und dieses auf dem Positionierungstisch 29 ablegen, wobei nun wieder auf dem Positionierungstisch 29 auch bzgl. des Seitenelementes 12 eine Positionierung, Kalibrierung und Vermessung erfolgt.

Das Seitenelement 12 wird nun durch den 3. Roboter 24, quasi im "handshake", mit dem 2. Roboter 23 vom Positionierungstisch 29 entnommen und an die Auftragsdüse 321 der Aufbringeinheit 32 geführt, wobei auf eine Kante des Seitenelementes 12, angedeutet durch den Pfeil 16, das Dicht- und Verbindungsmittel 16, d.h. auf die schmale Kantenfläche, aufgebracht wird. Nach Abschluß des Aufbringvorganges nur auf der einen Kantenfläche der vier Kanten, vgl. Fig. 2, des Dicht- und Verbindungsmittels 16 überführt der 3. Roboter 24 das Seitenelement 12 auf das Bodenelement 17, so daß die nicht mit einem Dicht- und Verbindungsmittel 16 versehene spätere Unterkantenfläche des Seitenelementes 12 auf dem Dicht- und Verbindungsmittel 16 des Bodenelementes 17 aufliegt und mit der mit dem Dicht- und Verbindungsmittel 16 versehenen Kantenfläche (Pfeil 16) auf dem vertikal positionierten Stirnelement 14 zu liegen kommt.

Zwischenzeitlich hat der 2. Roboter 23 das 2. Seitenelement 14 von dem Elementvorrat 19 entnommen und auf den Positionierungstisch 29 abgelegt, so daß auch beim 2. Seitenelement 13 der gleiche Positionierungs-, Kalibrierungs- und Vermessungsvorgang erfolgt, wie zuvor im Zusammenhang mit dem 1. Seitenelement 12 beschrieben. Auf gleiche Weise, wie zuvor im Zusammenhang mit dem ersten Seitenelement 12 beschrieben, wird nun das 2. Seitenelement 13 am gleichen Auftragsort mit einem Dicht- und Verbindungsmittel 16 im Bereich einer Kantenfläche (Pfeil 16) versehen und von dem 3. Roboter 24 auf die zum ersten Seitenelement 12 parallele Seite des Bodenelementes 17 an seinem anderen Ende positioniert und verbindet sich auch mit dem auf der schmalen Kantenfläche (Pfeil 16) aufgebrachten Dicht- und Verbindungsmittel 16 mit dem Stirnelement 14.

Somit befindet sich das Bodenelement 17 in einem Zustand, in dem es schon mit zwei Seitenelementen 12, 13 sowie dem hinteren Stirnelement 14 verbunden ist.

Zwischenzeitlich ist von einem Elementvorrat 20 durch den 2. Roboter 23 das zweite Stirnelement 15 entnommen worden und auf dem Positionierungstisch 29 abgelegt worden, wobei dort auch bzgl. des zweiten Stirnelementes 15 wiederum auf gleiche Weise wie zuvor beschrieben das Stirnelement 15 positioniert, kalibriert und vermessen wird. Wiederum quasi im "handshake" wird nun vom Positionierungstisch 29 mittels dem 3. Roboter 24 das Stirnelement 15 entnommen und an die Auftragdüse 321 der Aufbringeinheit 32 geführt, wobei auf dem vorderen Stirnelement 15 nun lediglich im Bereich der sich jeweils gegenüberliegenden Schmalseiten, vgl. Fig. 2, im Randbereich auf der späteren Innenfläche des Stirnelementes 15, wenn der Behälter 11 fertig ausgebildet ist, jeweils ein Streifen aus Dicht- und Verbindungsmittel 16 aufgebracht wird. Nach Abschluß dieser beiden Auftragvorgänge wird das vordere Stirnelement 17 vom 3. Roboter 24 zu dem fest positionierten, im Stützrahmen 18 liegenden Bodenelement 17 überführt, auf dem schon, wie zuvor beschrieben, das hintere Stirnelement 14 sowie die beiden Seitenelemente 12, 13 positioniert sind, und zwar derart, daß das vordere Stirnelement 15 mit seiner späteren unteren schmalen Kantenfläche auf dem Dicht- und Verbindungsmittel 16 des Bodenelementes 17 aufliegt und mit seinen beiden gegenüberliegenden Streifen aus Dicht- und Verbindungsmittel 16 auf den schmalen, vertikalen Kantenflächen der vertikal schon positionierten Seitenelemente 12, 13 aufliegt.

Somit ist ein einseitig offener (in der Regel oben offener) Behälter 11 durch die zuvor beschriebenen Verfahrensschritte gemäß dem erfindungsgemäßen Verfahren mittels der dazu benutzen Vorrichtung 10 komplett hergestellt.

Die Stützeinrichtung 30, mit der der Behälter 11 über sein hinteres Stirnelement 14 in der Position auf dem Fördermittel 39 gehalten worden war, wird nunmehr gelöst bzw. außereingriff mit dem hinteren Seitenelement 13 gebracht, wobei nachfolgend der fertige Behälter 11 mittels dem dann angetriebenen Fördermittel 39 in Richtung des Pfeiles 40 in den Bereich einer Bedienungsperson 41 gefördert wird. Dort kann der Behälter 11 noch mit einem oberen Stützrahmen (hier nicht dargestellt) um den Bereich seiner Öffnung herum versehen werden und der Behälter 11 kann durch die Bedienungsperson 41 im Hinblick auf die Ausbildung der durch das Dicht- und Verbindungsmittel 16 gebildeten Nähte, soweit erforderlich, nachgearbeitet werden.

Es versteht sich, daß zwischenzeitlich die Handhabungsvorgänge des 1., des 2. und des 3. Roboters 22. 23 und 24 im Zusammenwirken mit den Positionierungstischen 28, 29 und der Aufbringeinheit 32 sowie der das Dicht- und Verbindungsmittel 16 abgebenden Auftragdüsen 320, 321 fortwährend geeignet gesteuert mit ineinandergreifenden Verfahrensschritten ablaufen, d.h. die Bewegungsabläufe und die Handhabungsabläufe der Roboter zwar ineinandergreifen aber prinzipiell unabhängig voneinander ausgeführt gesteuert werden können.

### Bezuoszeichenliste

- 10: Vorrichtung
- 11: Behälter
- 12: Seitenelement
- 13: Seitenelement
- 14: Stirnelement
- 15: Stirnelement
- 16: Dicht- und Verbindungsmittel(streifen)
- 17: Bodenelement
- 18: Stützrahmen (Bodenelement)
- 19: Elementvorrat (Seitenelemente)
- 20: Elementvorrat (Stirnelemente)
- 21: Elementvorrat (Bodenelemente)
- 22: 1. Roboter
- 23: 2. Roboter
- 24: 3. Roboter
- 25: 1. Ort
- 26: 2. Ort
- 27: 3. Ort
- 28: Positionierungstisch
- 29: Positionierungstisch
- 30: Stützeinrichtung
- 31: unterdruckbeaufschlagte Mittel
- 32: Aufbringeinheit
- 33: Fördermittel
- 320: Auftragdüse
- 321: Auftragdüse
- 34:
- 35:
- 36:
- 37:
- 38:
- 39: Fördermittel/-einrichtung
- 390: Fördermittelsegmente
- 40: Richtung
- 41: Bedienungsperson

## Patentansprüche

1. Verfahren zur Herstellung von Behältern aus im wesentlichen plattenförmigen Elementen, die über ein Dicht- und Verbindungsmittel zur Ausbildung des Behälters miteinander verbunden werden, umfassend Seitenelemente und wenigstens ein Stirnelement und ein Bodenelement, wobei
a. wenigstens eines der Seitenelemente und/oder wenigstens ein Stirnelement in wenigstens einem Teil der Randbereiche unter Mitwirkung eines Roboters mit streifenförmig aufgebrachtem Dicht- und Verbindungsmittel versehen werden,
**dadurch gekennzeichnet,**
b. **daß** zunächst das Bodenelement in seinem Randbereich unter Mitwirkung eines Roboters mit streifenförmig aufgebrachtem Dicht- und Verbindungsmittel versehen wird und
c. **daß** nachfolgend die Seitenelemente und wenigstens ein Stirnelement mit einem Roboter ergriffen und einzeln mit dem Bodenelement über ein darauf aufgebrachtes Dicht- und Verbindungsmittel und untereinander über das darauf aufgebrachte Dicht- und Verbindungsmittel verbunden werden.

2. Verfahren nach Anspruch 1, **dadurch gekennzeichnet, daß** die Seitenelemente und/oder das wenigstens eine Stirnelement in nacheinander erfolgenden Schritten mittels des Roboters mit dem Bodenelement verbunden werden.

3. Verfahren nach Anspruch 1, **dadurch gekennzeichnet, daß** die Seitenelemente und/oder das wenigstens eine Stirnelement in wenigstens teilweise erfolgenden parallelen Schritten mittels des Roboters mit dem Bodenelement verbunden werden.

4. Verfahren nach einem oder mehreren der Ansprüche 1 bis 3, **dadurch gekennzeichnet, daß** das Bodenelement vor der Verbindung mit den Seitenelementen und dem wenigstens einen Stirnelement in einem das Bodenelement im wesentlichen umlaufenden Stützrahmen positioniert wird.

5. Verfahren nach Anspruch 4, **dadurch gekennzeichnet, daß** die Positionierung des Bodenelementes im Stützrahmen mittels eines Roboters erfolgt.

6. Verfahren nach einem oder mehreren der Ansprüche 1 bis 5, **dadurch gekennzeichnet, daß** mittels eines 1. Roboters das Bodenelement von einem Bodenelementvorrat entnommen und an einen 1- Ort zur Aufbringung des Dicht- und Verbindungsmittels überführt wird und von dort nach AbschluB des Aufbringungsvorganges an einem 2. Ort zur Ausführung des Verfahrensschrittes c. überführt wird.

7. Verfahren nach Anspruch 6, **dadurch gekennzeichnet, daß** das vom Bodenelementevorrat entnommene Bodenelement vor der Überführung an den 1. Ort zur Aufbringung des Dicht- und Verbindungsmittels in bezug auf seine Position relativ zu einem Aktuatorarm des 1. Roboters justiert und vermessen wird.

8. Verfahren nach einem oder mehreren der Ansprüche 1 bis 7, **dadurch gekennzeichnet, daß** mittels eines 2. Roboters die Seitenelemente und das wenigstens eine Stirnelement von einem Seiten- und Stirnelementenvorrat entnommen und mittels eines 3. Roboters an einen 1. Ort zur Aufbringung des Dicht- und Verbindungsmittels überführt werden und von diesem von dort nach Abschluß des Aufbringungsvorganges des Dicht- und verbindungsmittels an einen 2. Ort zur Ausführung des Verfahrensschrittes c. überführt werden.

9. Verfahren nach Anspruch 8, **dadurch gekennzeichnet, daß** die vom 2. Roboter erfaßten Seitenelemente und das wenigstens eine Stirnelement vor Übernahme durch den 3. Roboter in bezug auf ihre Position relativ zu einem Aktuatorarm des 3. Roboters justiert und vermessen werden.

10. Verfahren nach Anspruch 7, **dadurch gekennzeichnet, daß** die Justage der Position des Bodenelementes durch Ablage auf einen in zwei Freiheitsgraden geneigten ersten Positionierungstisch erfolgt.

11. Verfahren nach Anspruch 9, **dadurch gekennzeichnet, daß** die Justage der Position der Seitenelemente und des wenigstens einen Stirnelementes durch Ablage auf einen in zwei Freiheits-graden geneigten zweiten Positionierungstisch erfolgt.

12. Verfahren nach einem oder mehreren der Ansprüche 1 bis 11, **dadurch gekennzeichnet, daß** wenigstens das nach Verfahrensschritt c. erste mit dem Bodenelement verbundene Stirnelement nach dem Aufsetzen auf das Bodenelement wenigstens zeitweise gestützt in der bestimmungsgemäßen Position gehalten wird.

13. Verfahren nach Anspruch 12, **dadurch gekennzeichnet, daß** das Stirnelement mittels eines am Ort der Ausführung des Verfahrensschrittes c. angeordneten Stützeinrichtung in Position gehalten wird.

14. Verfahren nach Anspruch 13, **dadurch gekennzeichnet, daß** die Stützeinrichtung unterdruckbeaufschlagbare, gesteuert haltende und lösbare Haltemittel umfaßt.

15. Verfahren nach einem oder mehreren der Ansprüche 8 bis 14, **dadurch gekennzeichnet, daß** das Bodenelement sowie das wenigstens eine Stirnelement und Seitenelemente an den und von dem Ort ihrer Behandlung von den Robotern über unterdruckbeaufschlagbare, gesteuert haltbare und lösbare Haltemittel verbracht werden.

16. Verfahren nach einem oder mehreren der Ansprüche 8 bis 15, **dadurch gekennzeichnet, daß** am 1. Ort der Aufbringung des Dicht- und Verbindungsmittels eine Aufbringeinheit vorgesehen ist, die derart betreibbar ist, das die von dieser abgegebenen Menge des Dicht- und Verbindungsmittels pro Zeit steuerbar ist.

17. Verfahren nach einem oder mehreren der Ansprüche 1 bis 5, 9 bis 15, **dadurch gekennzeichnet, daß** die Aufbringung des Dicht- und Verbindungsmittels auf das Bodenelement und/oder die Seitenelemente und/oder das wenigstens eine Stirnelement mittels eines Roboters erfolgt.

18. Verfahren nach Anspruch 17, **dadurch gekennzeichnet, daß** der Roboter die Aufbringung des Dicht- und Verbindungsmittels auf das Bodenelement und/oder die Seitenelemente und/oder das wenigstens eine Stirnelement ausführt, der die jeweiligen Elemente bei der Ausführung der Verfahrensschritte handhabt.

19. Verfahren nach einem oder mehreren der Ansprüche 11 bis 15, 17 und 18, **dadurch gekennzeichnet, daß** die Aufbringung des Dicht- und Verbindungsmittels auf das Bodenelement und/oder die Seitenelemente und/oder das wenigstens eine Stirnelement mittels dem die jeweiligen Elemente handhabenden Roboter oder einem gesonderten Roboter an dem Ort der Vermessung und Justage erfolgt.

## Claims

1. Method for manufacturing containers from substantially plate-shaped elements, which are joined to one another by means of a sealing and bonding medium in order to construct the container, including side elements and at least one face element and one floor element, wherein
a. at least one of the side elements and/or at least one face element are provided in at least one part of the edge region with sealing and bonding medium applied in the form of strips with the assistance of a robot,
**characterised in that**
b. the floor element is first provided in its edge region with sealing and bonding medium applied in the form of strips with the assistance of a robot, and
c. subsequently the side elements and at least one face element are gripped by a robot and joined individually to the floor element by means of a sealing and bonding medium applied thereto, and to one another by means of the sealing and bonding medium applied thereto.

2. Method according to Claim 1, **characterised in that** the side elements and/or the at least one face element are joined to the floor element by means of the robot in steps, which are carried out consecutively.

3. Method according to Claim 1, **characterised in that** the side elements and/or the at least one face element are joined to the floor element by means of the robot in steps that are at least partially carried out in parallel.

4. Method according to one or more of Claims 1 to 3, **characterised in that** the floor element is positioned in a supporting frame, which runs substantially around the floor element, before being joined to the side elements and the at least one face element.

5. Method according to Claim 4, **characterised in that** the floor element is positioned in the supporting frame by means of a robot.

6. Method according to one or more of Claims 1 to 5, **characterised in that** the floor element is taken from a supply of floor elements by means of a first robot and transferred to a first place for applying the sealing and bonding medium, and on completion of the application process is transferred from there to a second place for carrying out method step c.

7. Method according to Claim 6, **characterised in that**, before being transferred to the first place for applying the sealing and bonding medium, the floor element taken from the supply of floor elements is adjusted and measured with regard to its position relative to an actuator arm of the first robot.

8. Method according to one or more of Claims 1 to 7, **characterised in that** the side elements and the at least one face element are taken from a supply of side and face elements by means of a second robot, and transferred by means of a third robot to a first place for applying the sealing and bonding medium, and on completion of the process of applying the sealing and bonding medium are transferred by said third robot from there to a second place for carrying out method step c.

9. Method according to Claim 8, **characterised in that**, before being transferred by the third robot, the side elements and the at least one face element picked up by the second robot are adjusted and measured with regard to their position relative to an actuator arm of the third robot.

10. Method according to Claim 7, **characterised in that** the adjustment of the position of the floor element is carried out by placing it on a first positioning table, which is inclined in two degrees of freedom.

11. Method according to Claim 9, **characterised in that** the adjustment of the position of the side elements and the at least one face element is carried out by placing them on a second positioning table, which is inclined in two degrees of freedom.

12. Method according to one or more of Claims 1 to 11, **characterised in that**, after being placed on the floor element, at least the first face element joined to the floor element in method step c. is at least temporarily held supported in the intended position.

13. Method according to claim 12, **characterised in that** the face element is held in position by means of a supporting device arranged at the place at which method step c. is carried out.

14. Method according to Claim 13, **characterised in that** the supporting device includes retaining means, to which a vacuum can be applied, and which hold and can be released under control.

15. Method according to one or more of Claims 8 to 14, **characterised in that** the floor element and the at least one face element and side elements are brought by the robots to and from the place at which they are processed by means of retaining means, to which a vacuum can be applied and which can hold and be released under control.

16. Method according to one or more of Claims 8 to 15, **characterised in that** an application unit is provided at the first place at which the sealing and bonding medium is applied, which can be operated in such a way that the amount of sealing and bonding medium output by said application unit per unit time can be controlled.

17. Method according to one or more of Claims 1 to 5, 9 to 15, **characterised in that** the application of the sealing and bonding medium to the floor element and/or the side elements and/or the at least one face element is carried out by means of a robot.

18. Method according to Claim 17, **characterised in that** the robot, which handles the respective elements when carrying out the process steps, applies the sealing and bonding medium to the floor element and/or the side elements and/or the at least one face element.

19. Method according to one or more of Claims 11 to 15, 17 and 18, **characterised in that** the application of the sealing and bonding medium to the floor element and/or the side elements and/or the at least one face element is carried out by means of the robot, which handles the respective elements, or by a separate robot at the place at which the measurement and adjustment is carried out.

## Revendications

1. Procédé de fabrication de conteneurs à partir d'éléments essentiellement en forme de plaques, qui sont reliés les uns aux autres par le biais d'un moyen d'étanchéité et de fixation pour former le conteneur, comprenant des éléments latéraux et au moins un élément frontal et un élément de fond, dans lequel
a. au moins un des éléments latéraux et/ou au moins un élément frontal sont pourvus d'un moyen d'étanchéité et de fixation appliqué sous forme de bandes sous l'action d'un robot dans au moins une partie des zones marginales,
**caractérisé,**
b. **en ce que** d'abord l'élément de fond est pourvu d'un moyen d'étanchéité et de fixation appliqué sous forme de bandes sous l'action d'un robot dans sa zone marginale et
c. en ce qu*'*ensuite les éléments latéraux et au moins un élément frontal sont saisis avec un robot et reliés un à un avec l'élément de fond par le biais d'un moyen d'étanchéité et de fixation appliqué dessus et entre eux par le biais du moyen d'étanchéité et de fixation appliqué dessus.

2. Procédé selon la revendication 1, **caractérisé en ce que** les éléments latéraux et/ou l'au moins un élément frontal sont reliés à l'élément de fond dans des étapes successives à l'aide du robot.

3. Procédé selon la revendication 1, **caractérisé en ce que** les éléments latéraux et/ou l'au moins un élément frontal sont reliés à l'élément de fond à l'aide du robot dans des étapes se produisant au moins en partie en parallèle.

4. Procédé selon l'une ou plusieurs des revendications 1 à 3, **caractérisé en ce que** l'élément de fond est positionné avant l'assemblage avec les éléments latéraux et l'au moins un élément frontal dans un cadre support tournant essentiellement autour de l'élément de fond.

5. Procédé selon la revendication 4, **caractérisé en ce que** l'élément dé fond est positionné dans le cadre support à l'aide d'un robot.

6. Procédé selon l*'*une ou plusieurs des revendications 1 à 5, **caractérisé en ce que**, l'élément de fond est prélevé d'un stock d'éléments de fond à l'aide d'un premier robot et est transporté à un premier endroit pour l'application du moyen d'étanchéité et de fixation et à la fin de l'application est transporté de là-bas à un deuxième endroit servant à exécuter l'étape de procédé c.

7. Procédé selon la revendication 6, **caractérisé en ce que** l'élément de fond prélevé du stock d'éléments de fond est ajusté et mesuré par rapport à sa position en rapport à un bras d'actionneur du premier robot avant le transport au premier endroit pour l'application du moyen d'étanchéité et de fixation.

8. Procédé selon l'une ou plusieurs des revendications 1 à 7, **caractérisé en ce que** les éléments latéraux et l'au moins un élément frontal sont prélevés d'un stock d'éléments latéraux et frontaux à l'aide d'un deuxième robot et transportés à l'aide d'un troisième robot à un premier endroit pour l'application du moyen d'étanchéité et de fixation et sont transportés à la fin de l'application du moyen d'étanchéité et de fixation de là-bas par celui-ci à un deuxième endroit pour réaliser l'étape de procédé c.

9. Procédé selon la revendication 8, **caractérisé en ce que** les éléments latéraux saisis par le deuxième robot et l'au moins un élément frontal sont ajustés et mesurés par rapport à leur position en rapport à un bras d'actionneur du troisième robot avant la prise en charge par le troisième robot.

10. Procédé selon la revendication 7, **caractérisé en ce que** la position de l'élément de fond est ajustée par le dépôt sur une première table de positionnement inclinée à deux degrés de liberté.

11. Procédé selon la revendication 9, **caractérisé en ce que** la position des éléments latéraux et l'au moins un élément frontal est ajustée par le dépôt sur une deuxième table de positionnement inclinée à deux degrés de liberté.

12. Procédé selon l'une ou plusieurs des revendications 1 à 11, **caractérisé en ce qu'**au moins le premier élément frontal relié à l'élément de fond selon l'étape de procédé c est maintenu après la pose sur l'élément de fond de façon soutenue au moins temporairement dans la position conforme aux spécifications.

13. Procédé selon la revendication 12, **caractérisé en ce que** l'élément frontal est maintenu en position à l'aide d'un dispositif de support disposé à l'endroit de l'exécution de l'étape de procédé c.

14. Procédé selon la revendication 13, **caractérisé en ce que** le dispositif de support comprend des moyens de retenue amovibles, de maintien commandés, pouvant être alimentés par dépression.

15. Procédé selon l'une ou plusieurs des revendications 8 à 14, **caractérisé en ce que** l'élément de fond ainsi que l'au moins un élément frontal et des éléments latéraux sont transportés au et à partir de l'endroit de leur traitement par des robots par le biais de moyens de retenue amovibles, de maintien commandés, pouvant être alimentés par dépression.

16. Procédé selon l'une ou plusieurs des revendications 8 à 15, **caractérisé en ce qu'**une unité d'application est prévue au premier endroit de l'application du moyen d'étanchéité et de fixation qui peut être exploitée de telle sorte que l'on peut commander la quantité de moyen d'étanchéité et de fixation délivrée par celle-ci par unité de temps.

17. Procédé selon l'une ou plusieurs des revendications 1 à 5, 9 à 15, **caractérisé en ce que** le moyen d'étanchéité et de fixation est appliqué sur l'élément de fond et/ou les éléments latéraux et/ou l'au moins un élément frontal à l'aide d'un robot.

18. Procédé selon la revendication 17, **caractérisé en ce que** le robot réalise l'application du moyen d'étanchéité et de fixation sur l'élément de fond et/ou les éléments latéraux et/ou l'au moins un élément frontal qui manie les éléments respectifs lors de la réalisation des étapes de procédé.

19. Procédé selon l'une ou plusieurs des revendications 11 à 15, 17 et 18, **caractérisé en ce que** l'application du moyen d'étanchéité et de fixation sur l'élément de fond et/ou les éléments latéraux et/ou l'au moins un élément frontal à l'aide du robot maniant les éléments respectifs ou d'un robot spécial se déroule à l'endroit de mesure et d'ajustage.
